# EUROPEAN PATENT APPLICATION

(11) **EP 4 311 435 A1**
(43) Date of publication of application: **31.01.2024**
(21) Application number: 22187876.2
(22) Date of filing: 29.07.2022
(51) Int. Cl.: A23F 3/06, A23F 3/16, A23F 3/08

(54) **A PROCESS FOR PRODUCING A TEA PRODUCT**

(71) Applicant: Ekaterra Research and Development UK Limited, London EC4Y 0DY (GB)
(72) Inventor: The designation of the inventor has not yet been filed
(74) Representative: Mewburn Ellis LLP

(57) **Abstract**

The present invention relates to a process of producing a black leaf tea product with a bright coloured liquor. In particular, the present invention relates to a process for the preparation of a black tea product comprising the step of adding one or more polycarboxylic acids and one or more enzymes capable of degrading plant biomass to a leaf tea starting material before or during a step of fermentation or incubation of the leaf tea starting material. The present invention also relates to a black tea product obtained by the process.

## Description

### Field of the invention

The present invention relates to a process of producing a tea product. More particularly the present invention relates to a process of producing a black leaf tea product with a bright coloured liquor.

### Background of the invention

Tea is one of the most widely consumed beverages in the world. There are several varieties of tea products available e.g. black tea, green tea, oolong tea. Different tea varieties are obtained by following different process starting from the raw tea leaves.

Black tea is believed to be most popular among all available tea varieties. Black tea is characterised by its bright red coloured liquor. In some areas, black tea is also consumed with the addition of milk. Those consumers believe that addition of milk enriches the taste of tea beverages. Therefore, the requirement for a bright and yellow coloured tea is a primary concern in the case of milk tea.

There is prior art which discloses tea products with enhanced sensorials.

WO 2013/075912 (Unilever) relates to a process for producing a black tea product with enhanced sensorials. It discloses a process of preparation of a tea product comprising the steps of: (a) taking fresh tea leaf; (b) incubating the fresh leaf at a temperature in the range 4°C to 60°C under anaerobic conditions for a period of 4-36 hours; (c) subjecting the incubated leaf to comminution; and (d) fermenting the comminuted leaf by keeping the leaf at a temperature of 15-35°C for 15 minutes to 3hours.

WO 2014/206883 (Unilever) discloses a process of producing a long leaf tea product with black tea characteristics. The process comprises the steps of: (a) incubating fresh tea leaf at a temperature in the range 4 degrees centigrade to 60 degrees centigrade under anaerobic conditions for a period of 4-36 hours; and (b) exposing the leaf at a temperature of 15-35 degrees centigrade for 70 minutes to 4 hours; wherein there is no step of comminution of the tea leaf before incubation and/or before step (b).

US 2007/0071870 (Conopco Inc.) discloses a process for making black or green tea with the floral aroma of oolong tea. The process utilises tumbling to physically wound the leaves to initiate the oolong aromas and does not involve a traditional solar wither step.

GB692778 (Alexander Maurice Hugo) discloses a tea manufacturing process in which fresh leaf is subjected to the stages of withering, bruising, twisting, fermenting, enzyme-killing and drying, or a selected sequence of these stages, while in a single closable rotatable container which can be heated and placed under vacuum or both.

WO 2019/001867 (Unilever) relates to a process for preparing a leaf tea product with a brighter coloured infusion and lower amount of aluminium. The process comprises the steps of (a) incubating fresh tea leaf at a temperature in the range 4 °C to 60° under anaerobic conditions for a period of 14 to 60 hours; and (b) subjecting the incubated leaf to a gyratory motion.

However, there remains a need for tea products with brighter and more yellow coloured infusions, and new and convenient methods for preparing the same.

The present inventors while working on this problem have surprisingly found that a process that comprises a step of treating tea leaves with one or more polycarboxylic acids and one or more enzymes capable of degrading plant biomass beneficially results in brighter coloured infusions, thereby satisfying the above-mentioned objective.

### Summary of the invention

In a first aspect, the present invention provides a process for the preparation of a black tea product comprising the step of adding one or more polycarboxylic acids and one or more enzymes capable of degrading plant biomass (e.g. a pectinase enzyme) to a leaf tea starting material before or during a step of fermentation or incubation of the leaf tea starting material.

In a particular embodiment, the present invention provides a process for the preparation of a black tea product comprising the steps of:
a) providing a leaf tea starting material;
b) adding one or more polycarboxylic acids and one or more enzymes capable of degrading plant biomass (e.g. a pectinase enzyme) to the leaf tea starting material;
c) fermenting or incubating the leaf tea starting material of step b) by keeping the leaf tea at a temperature of between 15 and 40 degrees centigrade for a duration of between 15 minutes and 3 hours; and,
d) drying the leaf tea of step c) to a moisture content of less than 10% by weight.

The end product of the process of this process is a black leaf tea product which has different properties to the starting material. Thus, in a second aspect, the present invention relates to a black leaf tea product obtainable by the process of the first aspect of the invention.

### Detailed description of the invention

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example the process of the invention), such disclosure is also to be considered to apply to any other aspect of the invention (for example a black tea product of the invention) *mutatis mutandis*.

For the purpose of the present invention, "tea" means material from Camellia sinensis var. sinensis and/or Camellia sinensis var. assamica.

The term "leaf tea starting material" refers to "fresh leaf tea" or "black leaf tea". In certain embodiments, the leaf tea starting material is a fresh leaf tea starting material.

"Fresh leaf tea" refers to tea leaves, buds and/or stem that have never been dried to a water content of less than 30 wt.%, and usually have a water content of 60 to 90 wt.%.

As used herein, the term "black leaf tea" refers to substantially fermented tea, wherein "fermentation" refers to the oxidative and hydrolytic process that tea undergoes when certain endogenous enzymes and substrates are brought together. During the so-called fermentation process, colourless catechins in the leaves and/or stem are converted to a complex mixture of yellow/orange to dark brown polyphenolic substances. For example, black leaf tea can be manufactured from fresh tea material by the steps of: withering, maceration, fermentation and drying. A more detailed description of the production of black tea can be found in Chapter 14 of "Tea: Cultivation to consumption" (edited by K.C. Wilson & M.N. Clifford, published in 1992).

"Black leaf tea" therefore refers to leaf tea dried to a moisture content of less than 10 wt.%, and the moisture content of the post-auction leaf tea will not usually be below 0.1 wt.%. Black leaf tea is a readily available commercial product which can be purchased in bulk at tea auctions. In other words, the term "black leaf tea" refers to the end product of black tea manufacture (sometimes referred to as "made tea"). Typically, the post-auction black leaf tea has a moisture content of 1 to 5 wt.%.

The end product of the process of the present invention is a black leaf tea product. This black leaf tea product is manufactured by exposing the leaf tea starting material to one or more polycarboxylic acids and one or more enzymes capable of degrading plant biomass (e.g. a pectinase enzyme) before or during a fermentation (or incubation) a step. Processing the black leaf tea in this way produces a black leaf tea product which has different properties to the starting material, particularly a brighter and more yellow coloured infusion liquor.

As used herein, the term "comprising" encompasses the terms "consisting essentially of" and "consisting of". All percentages and ratios contained herein are calculated by weight unless otherwise indicated. It should be noted that in specifying any range of values or amounts, any particular upper value or amount can be associated with any particular lower value or amount. Except in the operative and comparative examples, all numbers in the description indicating amounts of materials, conditions of reaction, physical properties of materials, and/or use are to be understood as being preceded by the word "about". The various features of the embodiments of the present invention referred to in individual sections above apply, as appropriate, to other sections mutatis mutandis. Consequently, features specified in one section may be combined with features specified in other sections as appropriate. The disclosure of the invention as found herein is to be considered to cover all embodiments as found in the claims as being multiply dependent upon each other. Unless defined otherwise, all technical and scientific terms used herein have the same meaning as commonly understood by one of ordinary skill in the art in the field of tea processing.

In a first aspect, the present invention provides a process for the preparation of a black tea product comprising the step of adding one or more polycarboxylic acids and one or more enzymes capable of degrading plant biomass (e.g. a pectinase enzyme) to a leaf tea starting material before or during a step of fermentation or incubation of the leaf tea starting material.

In a particular embodiment, the present invention provides a process for the preparation of a black tea product comprising the steps of:
a) providing a leaf tea starting material;
b) adding one or more polycarboxylic acids and one or more enzymes capable of degrading plant biomass (e.g. a pectinase enzyme) to the leaf tea starting material;
c) fermenting or incubating the leaf tea starting material of step b) by keeping the leaf tea at a temperature of between 15 and 40 degrees centigrade for a duration of between 15 minutes and 3 hours; and,
d) drying the leaf tea of step c) to a moisture content of less than 10% by weight.

### Step a)

In certain embodiments, the leaf tea starting material is a fresh leaf tea starting material.

In its simplest form, the fresh tea leaf starting material is provided in freshly plucked form, i.e. without any further processing. The fresh tea leaf starting material preferably comprises leaf and stem material. Most preferably the fresh tea leaf starting material comprises actively growing buds, e.g. in the form of the first two or three leaves together with the unopened bud (so-called "two-and-a-bud" and/or "three-and-a-bud" material).

The fresh tea leaf starting material may be withered prior to step (b). The fresh tea leaves are typically withered for about 12 to 36 hours. Withering allows certain chemical and biochemical changes to occur and also reduces the moisture content of the leaves to around 35 to 70%.

The fresh tea leaf may additionally or alternatively be macerated prior to step (b).

Maceration involves wounding the leaves e.g. by rolling and/or crushing the leaves i.e. to break down the plant tissue structure. In black tea manufacture this has the effect of liberating fermentable substrates and fermenting enzymes from within the plant cells and tissue. The maceration is preferably achieved by passing the fresh tea leaves through a cutting machine. Thus, for the purpose of the invention the fresh tea leaves may be macerated by a maceration process using a crush, tear and curl (CTC) process, rotorvane, ball mill or a grinder or a hammer mill or a Lawri tea processor or a Legg cutting machine or rolled using tea rollers as in orthodox tea processing. Combinations of these maceration processes may also be used.

In certain preferred embodiments, the fresh tea leaves are macerated by a crush, tear and curl (CTC) process.

In some embodiments, the leaf tea starting material is a black leaf tea starting material. That is, the leaf tea starting material is a post-auction black leaf tea starting material which is substantially fermented and has a moisture content of between 1 and 10 wt.%.

### Step b)

During step b) a combination of one or more polycarboxylic acids and one or more enzymes capable of degrading plant biomass (e.g. a pectinase enzyme) are added to the leaf tea starting material.

It will be appreciated that the term "polycarboxylic acid" refers to any organic acid comprising two or more carboxylic acid (-COOH) groups. A non-limiting list of suitable polycarboxylic acids include citric acid, malic acid, succinic acid, tartaric acid, oxalic acid, adipic acid, fumaric acid, maleic acid, malonic acid, glutaric acid, aspartic acid, glutamic acid, aconitic acid, propane-1,2,3-tricarboxylic acid and agaric acid.

In certain embodiments, the polycarboxylic acid is selected from citric acid, malic acid, succinic acid, tartaric acid, oxalic acid, adipic acid, fumaric acid, maleic acid and combinations thereof. Preferably, the polycarboxylic acid is selected from citric acid, malic acid, succinic acid, tartaric acid and combinations thereof. Most preferably, the polycarboxylic acid is citric acid.

In certain embodiments, only one polycarboxylic acid (e.g. citric acid ) is added in combination with one or more enzymes capable of degrading plant biomass (e.g. a pectinase enzyme).

It will be understood that the polycarboxylic acid may be added in the form of an aqueous solution of the polycarboxylic acid. The skilled person will be able to suitably determine a suitable concentration of polycarboxylic acid to use. Preferably, the polycarboxylic acid is in the form of an aqueous solution at a concentration of between 0.005M and 0.5M. More preferably, the polycarboxylic acid is in the form of an aqueous solution at a concentration of between 0.01M and 0.1M. Most, preferably, the polycarboxylic acid is in the form of an aqueous solution at a concentration of between 0.01M and 0.1M.

The polycarboxylic acid, for example an aqueous solution thereof, may be administered to the leaf using any suitable method. For example, the leaf tea starting material may be sprayed, dipped or soaked in an aqueous solution of the polycarboxylic acid. In a preferred embodiment, the polycarboxylic acid is added to the leaf tea starting material by spraying.

The polycarboxylic acid may be added in step b) in any suitable amount. Preferably, the polycarboxylic acid is added in an amount of between 0.1 and 10 wt% based on the weight of the leaf tea starting material. More preferably, the polycarboxylic acid is added in an amount of between 0.1 and 5 wt% based on the weight of the leaf tea starting material. Even more preferably, the polycarboxylic acid is added in an amount of between 0.25 and 2 wt% based on the weight of the leaf tea starting material. Yet more preferably, the polycarboxylic acid is added in an amount of between 0.5 and 1.5 wt% based on the weight of the leaf tea starting material, such as 1 wt%.

It will be understood that the enzyme(s) capable of degrading plant biomass refers to any enzyme that is capable of breaking down polysaccharides (e.g. pectin, cellulose and hemicellulose) present in plant material. In certain embodiments, the one or more enzymes capable of degrading plant biomass are selected from pectinase enzymes, cellulase enzymes or hemicellulase enzymes. Preferably, the enzyme(s) capable of degrading plant biomass are pectinase enzymes.

It will be appreciated that a cellulase enzyme is an enzyme which is capable of breaking down cellulose (e.g. an enzyme capable of breaking down cellulose into in glucose or a disaccharide).

A hemicellulase enzyme will be understood to be an enzyme capable of breaking down hemicelluloses, such as xylans, xyloglucans, arabinoxylans, and glucomannans, from plant biomass.

It will also be appreciated that the pectinase enzyme may be any suitable form of pectinase enzyme. That is, any enzyme which is capable of breaking down pectin. In certain embodiments, the pectinase enzyme is an enzyme which targets pectin via polygalacturonase, also known as pectin depolymerase, or an enzyme which targets pectin via pectin lyase, also known as pectolyase, or an enzyme which targets pectin via pectinesterase.

The enzyme capable of degrading plant biomass (e.g. pectinase enzyme) may also be added in the form of an aqueous solution. The skilled person will be able to determine a suitable concentration of the aqueous solution of the enzyme (e.g. a pectinase enzyme) to use. Preferably, the concentration of the aqueous solution of enzyme (e.g. pectinase enzyme) is between 0.1 wt% and 10 wt%, based on the weight of enzyme (e.g. pectinase enzyme) to water.

In certain embodiments, the concentration of the aqueous solution of enzyme (e.g. pectinase enzyme) is between 0.01mM and 1mM. Preferably, the concentration of the aqueous solution of enzyme (e.g. pectinase enzyme) is between 0.1mM and 0.5mM.

The enzyme (e.g. pectinase enzyme) and, for example, the aqueous solution thereof, may be administered using any suitable technique, such as via spraying.

The enzyme capable of degrading plant biomass (e.g. pectinase enzyme) may be also added in step b) in any suitable amount. Preferably, the enzyme (e.g. pectinase enzyme) is added in an amount of between 0.1 and 10 wt% based on the weight of the leaf tea starting material. More preferably, the enzyme (e.g. pectinase enzyme) is added in an amount of between 0.1 and 5 wt% based on the weight of the leaf tea starting material. Even more preferably, the enzyme (e.g. pectinase enzyme) is added in an amount of between 0.25 and 2 wt% based on the weight of the leaf tea starting material. Yet more preferably, the enzyme (e.g. pectinase enzyme) is added in an amount of between 0.5 and 1.5 wt% based on the weight of the leaf tea starting material, such as 0.75 wt%.

### Step c)

Step c involves fermenting or incubating the leaf tea starting material of step a) by keeping the leaf tea at a temperature of between 15 and 40 degrees centigrade for a duration of between 15 minutes and 3 hours.

Preferably, step c is conducted at a temperature of between 20 and 35 degrees centigrade, most preferably at a temperature of between 20 and 30 degrees.

Preferably, step c is conducted for a duration of between 15 minutes and 2 hours, most preferably for a duration of between 30 minutes and 2 hours, such as 90 minutes.

### Step d)

The process of the invention includes the step of drying the tea leaf to form the black tea product.

The drying step of this invention should be such as to result in "complete drying". By "complete drying" is meant a reduction of moisture content of the tea to below 30%, more preferably between 1 and 10% and optimally to a moisture content of about 5% by weight. The drying may also lead to further chemical oxidation of tea and changes in tea taste, colour and aroma.

It will be appreciated that any suitable method of drying may be used.

In certain embodiments, the step of drying is conducted using "conventional dryers".

The term "conventional dryers" refers to those dryers utilising a large amount of air flow, i.e greater than 5 kg of air per kg of water evaporated, typically greater than 20 kg of air per kg of water evaporated. Fluid bed dryers, and tray dryers, either batch or continuous are two such types of conventional dryers. Drying in a fluid bed dryer is usually carried out at an air inlet temperature in the range of between 90 and 140 °C, an outlet air temperature of less than 90 °C and a bed temperature in the range of 45 to 90 °C.

In certain preferred embodiments, the step of drying is conducted using a fluid bed dryer at a temperature of between 90 and 140 °C, preferably at a temperature of between 100 and 130 °C, and most preferably at a temperature of between 110 and 120 °C.

In some embodiments, the step of drying may firing. The firing involves heating and drying the fermented tea to destroy the fermenting enzymes and thereby arrest fermentation.

### Particularly preferred embodiments

In a particularly preferred embodiment, the present invention provides a process for the preparation of a black tea product comprising the steps of:
a) providing a fresh leaf tea starting material;
b) withering the fresh leaf tea starting material of step a) to a moisture content of between 35 to 70% (preferably between 55 and 70 %);
c) macerating the withered fresh leaf tea starting material of step b);
d) adding one or more polycarboxylic acids (e.g. citric acid) and a pectinase enzyme to the macerated fresh leaf tea starting material of step c);
e) fermenting the leaf tea starting material of step d) by keeping the leaf tea at a temperature of between 15 and 40 degrees centigrade for a duration of between 15 minutes and 3 hours; and,
f) drying the leaf tea of step e) to a moisture content of less than 10% by weight.

In another preferred embodiment, the present invention provides a process for the preparation of a black tea product comprising the steps of:
a) providing a fresh leaf tea starting material;
b) withering the fresh leaf tea starting material of step a) to a moisture content of between 35 to 70% (preferably between 55 and 70 %);
c) macerating the withered fresh leaf tea starting material of step b), preferably by a CTC process;
d) adding one or more polycarboxylic acids (e.g. citric acid) and a pectinase enzyme to the macerated fresh leaf tea starting material of step c);
e) fermenting the leaf tea starting material of step d) by keeping the leaf tea at a temperature of between 15 and 40 degrees centigrade for a duration of between 15 minutes and 3 hours; and,
f) drying the leaf tea of step e) to a moisture content of less than 10% by weight,
and wherein the one or more polycarboxylic acids and pectinase enzyme are each independently added in an amount of between 0.1 and 5 wt% based on the weight of the fresh leaf tea starting material.

In another preferred embodiment, the present invention provides a process for the preparation of a black tea product comprising the steps of:
a) providing a fresh leaf tea starting material;
b) withering the fresh leaf tea starting material of step a) to a moisture content of between 35 to 70% (preferably between 55 and 70 %);
c) macerating the withered fresh leaf tea starting material of step b), preferably by a CTC process;
d) adding one or more polycarboxylic acids (e.g. citric acid) and a pectinase enzyme to the macerated fresh leaf tea starting material of step c);
e) fermenting the leaf tea starting material of step d) by keeping the leaf tea at a temperature of between 15 and 40 degrees centigrade for a duration of between 15 minutes and 3 hours; and,
f) drying the leaf tea of step e) to a moisture content of less than 10% by weigh using a fluid bed dryer at a temperature of between 90 and 140 °C,
and wherein the one or more polycarboxylic acids and pectinase enzyme are each independently added in an amount of between 0.25 and 2 wt% based on the weight of the fresh leaf tea starting material.

### Other optional steps

The process of the present invention may also comprise a step of coating the black leaf tea product with one or more vitamins or minerals. A non-limiting list of suitable vitamins and minerals include vitamin C, vitamin D, zinc and iron.

The present invention will now be illustrated by reference to the following non-limiting examples.

### Examples

Several leaf tea products were prepared using the processes described below.

### Materials

The materials used in the experiments below were as follows:
- Pectinase Enzyme: i) Pectinase T200 was sourced from Advanced enzyme which contained 150000 units per gram of powder (DW); ii) Pectinase NZ-61 was sourced from Novozymes.
- Citric acid monohydrate was sourced from Rishi Chemical Works Ltd, Uttarakhand-India, CAS number 5949-29-1.
- Malic acid, succinic acid, tartaric acid and acetic acid were all sourced from Sigma Aldrich.
- Tea leaves were sourced from Kenya.

### Investigations into the effects of the addition of a polycarboxylic acid and a pectinase enzyme on infusion colour and brightness.

### Example 1

A leaf tea product was prepared as follows:
a. Tea shoots of Kenyan origin were withered to a moisture content of 68%;
b. Post withering, the tea leaves were subjected to maceration by using 4x CTC;
c. After CTC, the resulting dhool was fermented for 90 minutes; and
d. Post fermentation, the fermented dhool was dried in a fluid bed dryer (FBD) at a temperature of between 110- and 120 °C until the moisture content of the leaf tea reached 3%.

### Example 2

A leaf tea product was prepared as follows:
a. Tea shoots of Kenyan origin were withered to a moisture content of 68%;
b. Post withering, the tea leaves were subjected to maceration by using 4x curl-tear-curl CTC operations;
c. After CTC, the resulting dhool was sprayed with an aqueous solution of citric acid monohydrate (concentration 0.05M) such that 1% of citric acid by weight of the tea leaves was added to the dhool. The dhool was also mixed during and after the application of citric acid monohydrate and the sprayed dhool was allowed to ferment at ambient temperature (approximately 25 °C) for 90 minutes; and
d. Post fermentation, the fermented dhool was dried in a fluid bed dryer (FBD) at a temperature of between 110-120 °C until the moisture content of the leaf tea reached 3%.

### Example 3

A leaf tea product was prepared as follows:
a. Tea shoots of Kenyan origin were withered to a moisture content of 68%;
b. Post withering, the tea leaves were subjected to maceration by using 4x curl-tear-curl CTC operations;
c. After CTC, the resulting dhool was sprayed with an aqueous solution of pectinase enzyme (T200) (concentration 0.0002M) such that 0.75% of pectinase enzyme by weight of the tea leaves was added to the dhool. The dhool was also mixed during and after the application of the pectinase enzyme and the sprayed dhool was allowed to ferment at ambient temperature for 90 minutes;
d. Post fermentation, the fermented dhool was dried in a fluid bed dryer (FBD) at a temperature of between 110 and 120 °C until the moisture content of the leaf tea reached 3%.

### Example 4

A leaf tea product was prepared as follows:
a. Tea shoots of Kenyan origin were withered to a moisture content of 68%;
b. Post withering, the tea leaves were subjected to maceration by using 4x curl-tear-curl CTC operations;
c. After CTC, the resulting dhool was sprayed with an aqueous solution of pectinase enzyme (T200) and citric acid monohydrate (concentration of pectinase = 0.0002M, concentration of citric acid = 0.05M) such that 0.75% of pectinase enzyme and 1% of citric acid monohydrate by weight of the tea leaves were added to the dhool. The dhool was also mixed during and after the application of the pectinase enzyme and citric acid monohydrate and the sprayed dhool was allowed to ferment at ambient temperature for 90 minutes; and
d. Post fermentation, the fermented dhool was dried in a fluid bed dryer (FBD) at a temperature of between 110 and 120 °C until the moisture content of the leaf tea reached 3%.

### Infusion Preparation

Tea samples were brewed using the following protocol.

5.6 g of a black tea leaf product (prepared using the protocols described above) was brewed in 280 ml of boiled (hot) water for 6 minutes before being strained. Post straining, the infusion was topped up with 5 ml of milk containing 3% fat.

### Infusion Colour Evaluation

Infusion colour was measured using the following protocol.

Infusion colour was measured using a Hunter lab Ultrascan VIS (Model-USVIS1437). A halogen cycle lamp was used as the light source. The illuminant used was D65 and the measurements were made at 10°- Observer angle. Measurements were made in reflectance mode (RSIN Mode) using a 1cm quartz cuvette of 10 mm path length.

Tea infusions as prepared above was filled up to the brim in the cuvette and placed in the instrument for colour measurement. The instrument was calibrated using a standard white tile (Hunterlab Duffuse/8°, mode-RSEX, Port-1" and area- large) in accordance with the instructions provided in the instruction's manual.

The L*a*b* values were measured at room temperature (25°C).

The a* and b* axes have no specific numerical limits. Positive a* is red and negative a* is green. The higher the a* value, the redder the infusion appears. Similarly, positive b* is yellow and negative b* is blue. The higher the b* value, the brighter the infusion appears. Δb* represents the change in b* value of a sample as compared to the b* value of the control sample (i.e. a black tea product not treated with acid and/or pectinase).

The results are summarized below in Table 1.

**Table 1. Infusion colour as measured in a Hunter Lab instrument in reflectance mode**

| **Example** | **Sample** | **L*** | **a*** | **b*** | **Δb*** |
|---|---|---|---|---|---|
| 1 | Control | 42.45 | 9.25 | 14.51 | |
| 2 | 1% Citic acid | 43.36 | 11.45 | 16.04 | 1.53 |
| 3 | 0.75% Pectinase | 42 | 9.84 | 14.7 | 0.19 |
| 4 | 1% Citric acid + 0.75% pectinase | 46.82 | 13.31 | 21.95 | 7.44 |

It is clear from the above table that the combined addition of a polycarboxylic acid (citric acid) and an enzyme capable of degrading plant biomass (e.g. pectinase) to a tea leaf product result in a significant increase in b* value, and thus the brightness and yellow colour of the infusion. This increase in b* and brightness is far superior to the minor increases brought about by the independent addition of a polycarboxylic acid (citric acid) and pectinase alone. That is, the combined addition of a polycarboxylic acid (citric acid) and an enzyme capable of degrading plant biomass (e.g. pectinase) clearly results in a synergistic increase to the brightness of a tea leaf product that is both surprising and significant.

### Investigations into the effects of the amount of polycarboxylic acid and pectinase

Next, systematic studies were carried out to determine the effects of the amounts of polycarboxylic acid (citric acid) and pectinase on infusion brightness.

### Example 5

A leaf tea product was prepared as follows:
a. Tea shoots of Kenyan origin were withered to a moisture content of 68%;
b. Post withering, the tea leaves were subjected to maceration by using 4x curl-tear-curl CTC operations.
c. After CTC, the resulting dhool was sprayed with an aqueous solution of pectinase enzyme (T200) and citric acid monohydrate (concentration of pectinase = 0.0002M, concentration of citric acid = 0.05M) such that 0.1% of pectinase enzyme and 1% of citric acid monohydrate by weight of the tea leaves were added to the dhool. The dhool was also mixed during and after the application of the pectinase enzyme and citric acid monohydrate and the sprayed dhool was allowed to ferment at ambient temperature for 90 minutes; and
d. Post fermentation, the fermented dhool was dried in a fluid bed dryer (FBD) at a temperature of between 110 and120 °C until the moisture content of the leaf tea reached 3%.

### Example 6

A leaf tea product was prepared using the same method as described in Example 5, except that 0.25% of pectinase enzyme and 1% of citric acid monohydrate by weight of the tea leaves were added to the dhool.

### Example 7

A leaf tea product was prepared using the same method as described in Example 5, except that 0.5% of pectinase enzyme and 1% of citric acid monohydrate by weight of the tea leaves were added to the dhool.

### Example 8

A leaf tea product was prepared using the same method as described in Example 5, except that 1 % of pectinase enzyme and 1 % of citric acid monohydrate by weight of the tea leaves were added to the dhool.

### Example 9

A leaf tea product was prepared using the same method as described in Example 5, except that 0.75% of pectinase enzyme and 0.25% of citric acid monohydrate by weight of the tea leaves were added to the dhool.

### Example 10

A leaf tea product was prepared using the same method as described in Example 5, except that 0.75% of pectinase enzyme and 0.5% of citric acid monohydrate by weight of the tea leaves were added to the dhool.

### Example 11

A leaf tea product was prepared using the same method as described in Example 5, except that 0.75% of pectinase enzyme and 1% of citric acid monohydrate by weight of the tea leaves were added to the dhool.

Using the same infusion preparation protocol and infusion colour evaluation method described hereinabove, the infusion colour properties of Examples 5 to 11 were determined.

The results are summarized below in Table 2 and Table 3.

**Table 2. Infusion colour as measured in a Hunter Lab instrument in reflectance mode for black tea products treated with differing amounts of pectinase and a fixed amount of citric acid.**

| **Example** | **Sample** | **L*** | **a*** | **b*** | **Δb*** |
|---|---|---|---|---|---|
| 5 | 1% Citric acid + 0.1% | 39.1 | 10 | 16.7 | 2.3 |
| | Pectinase | | | | |
| 6 | 1% Citric acid + 0.25% | 40.5 | 10.8 | 18.1 | 3.7 |
| | Pectinase | | | | |
| 7 | 1% Citric acid + 0.5% | 40.2 | 10 | 18.3 | 3.9 |
| | Pectinase | | | | |
| 8 | 1% Citric acid + 1% | 40.1 | 10.5 | 18.6 | 4.2 |
| | Pectinase | | | | |

**Table 3. Infusion colour as measured in a Hunter Lab instrument in reflectance mode for black tea products treated with differing amounts of citric acid and a fixed amount of pectinase.**

| **Example** | **Samples** | **L*** | **a*** | **b*** | **Δb*** |
|---|---|---|---|---|---|
| 9 | 0.25% Citric acid + 0.75% Pectinase | 44.73 | 9.28 | 17.28 | 3.7 |
| 10 | 0.5% Citric acid + 0.75% Pectinase | 44.16 | 9.53 | 18.26 | 3.9 |
| 11 | 1% Citric acid + 0.75% | 44.64 | 10.26 | 20.51 | 4.2 |
| | Pectinase | | | | |

From the above experiments, it can be seen that the combined addition of 1 wt% of a polycarboxylic acid (citric acid) and 0.75 wt% an enzyme capable of degrading plant biomass (pectinase) based on the weight of the tea leaves is the most effective at achieving brightly coloured infusion liquors.

### Investigations into the effect of the type of polycarboxylic acid

Next, systematic studies were carried out to investigate the impact of several different types of polycarboxylic acids on infusion brightness.

### Example 12

A leaf tea product was prepared using the same method as described in Example 1, except that a different batch of tea shoot of Kenyan origin was used.

### Example 13

A leaf tea product was prepared using the same method as described in Example 4, except that a different batch of tea shoot of Kenyan origin was used.

### Example 14

A leaf tea product was prepared using the same method as described in Example 4, except that a different batch of tea shoot of Kenyan origin was used and 1% of malic acid was used as the polycarboxylic acid.

### Example 15

A leaf tea product was prepared using the same method as described in Example 4, except that a different batch of tea shoot of Kenyan origin was used and 1% of succinic acid was used as the polycarboxylic acid.

### Example 16

A leaf tea product was prepared using the same method as described in Example 4, except that a different batch of tea shoot of Kenyan origin was used and 1% of tartaric acid was used as the polycarboxylic acid.

Using the same infusion preparation protocol and infusion colour evaluation method described hereinabove, the infusion colour properties of Examples 12 to 16 were determined.

The results are summarized below in Table 4.

**Table 4. Infusion colour as measured in a Hunter Lab instrument in reflectance mode for black tea products treated with different polycarboxylic acids and a pectinase.**

| **Example** | **Experiment** | **L*** | **a*** | **b*** | **Δb** |
|---|---|---|---|---|---|
| 12 | Control | 35.42 | 11.1 | 25.08 | |
| 13 | 1% Citric acid + 0.75% pectinase (AE) | 39.04 | 10.53 | 28.98 | 3.90 |
| 14 | 1% Malic acid + 0.75% pectinase (AE) | 38.86 | 10.47 | 28.79 | 3.71 |
| 15 | 1% Succinic acid + 0.75% Pectinase (AE) | 38.35 | 10.91 | 28.24 | 3.16 |
| 16 | 1% Tartaric acid + 0.75% Pectinase (AE) | 39.25 | 10.62 | 29.64 | 4.56 |

In the above experiments, all tested polycarboxylic acids were effective at providing a significant brightening and more intense yellow colour to the infusion when used in combination with an enzyme capable of degrading plant biomass (e.g. pectinase).

### Investigations into the effect of different types of pectinases

Two different sources and types of pectinase enzyme were next used: pectinase T200 from Advance Enzymes and pectinase NZ-61 from Novozymes. Both enzymes have pectin lysing activity. The two pectinase enzymes used also have equivalent activity.

However, each enzyme targets the pectin substrate in via a different mechanism: T-200 mainly targets pectin via polygalacturonase, also known as pectin depolymerase, whereas NZ-61 mainly targets pectin via pectin lyase, also known as pectolyase.

### Example 17

A leaf tea product was prepared using the same method as described in Example 1, except that a different batch of tea shoot of Kenyan origin was used.

### Example 18

A leaf tea product was prepared using the same method as described in Example 4, except that a different batch of tea shoot of Kenyan origin was used.

### Example 19

A leaf tea product was prepared using the same method as described in Example 18, except that 2wt % of pectinase NZ-61 was used instead of 0.75 wt% of pectinase T200.

Using the same infusion preparation protocol and infusion colour evaluation method described hereinabove, the infusion colour properties of Examples 17 to 19 were determined.

The results are summarized below in Table 5.

**Table 5. Infusion colour as measured in a Hunter Lab instrument in reflectance mode for different pectinases.**

| **Example** | **Sample** | **L*** | **a*** | **b*** | **Δb** |
|---|---|---|---|---|---|
| 17 | Control | 35.42 | 11.1 | 25.08 | |
| 18 | 1% Citric acid + 0.75% | 39.04 | 10.53 | 28.98 | **3.90** |
| | Pectinase (T-200/150000U) | | | | |
| 19 | 1% Citric acid + 2% Pectinase (N-Z61/150000U) | 39.30 | 11.09 | 29.34 | **4.26** |

As can be seen from the results above, brighter and more yellow-coloured infusions are achieved using a polycarboxylic acid in combination with various different types of pectinase enzyme.

### Investigations into the effectiveness of monocarboxylic acids

Studies looking into the effect of monocarboxylic acids were next carried out.

### Example 20

A leaf tea product was prepared using the same method as described in Example 1, except that a different batch of tea shoot of Kenyan origin was used.

### Example 21

A leaf tea product was prepared using the same method as described in Example 2, except that a different batch of tea shoot of Kenyan origin was used and 1% w/w of acetic acid was used in place of the 1% w/w of citric acid.

### Example 22

A leaf tea product was prepared using the same method as described in Example 4, except that a different batch of tea shoot of Kenyan origin was used and 1% w/w of acetic acid was used in place of the 1% w/w of citric acid.

Using the same infusion preparation protocol and infusion colour evaluation method described hereinabove, the infusion colour properties of Examples 20 to 22 were determined.

The results are summarized below in Table 6.

**Table 6. Infusion colour as measured in a Hunter Lab instrument in reflectance mode using a monocarboxylic acid (acetic acid) and pectinase.**

| **Samples Details** | **L** | **a** | **b** | **Δb** |
|---|---|---|---|---|
| Control | 37.91 | 6.48 | 13.85 | |
| 1 % Acetic acid | 37.48 | 6.40 | 13.91 | 0.06 |
| 1% Acetic acid + 0.75% pectinase | | | | |
| Enzyme (T200) | 38.33 | 6.39 | 14.59 | 0.74 |

As can be seen from the results above, the combined used of an enzyme capable of degrading plant biomass (e.g. pectinase) and a monocarboxylic acid (acetic acid) resulted in a very modest brightening of the infusion colour. These results clearly demonstrate the surprising and significant increase in infusion colour brought about by the treatment of a leaf tea product with a both a polycarboxylic acid and a pectinase enzyme.

## Claims

1. A process for the preparation of a black tea product comprising the step of adding one or more polycarboxylic acids and one or more enzymes capable of degrading plant biomass to a leaf tea starting material before or during a step of fermentation or incubation of the leaf tea starting material.

2. A process according to claim 1, comprising the steps of:
a) providing a leaf tea starting material;
b) adding one or more polycarboxylic acids and one or more enzymes capable of degrading plant biomass to the leaf tea starting material;
c) fermenting or incubating the leaf tea starting material of step b) by keeping the leaf tea at a temperature of between 15 and 40 degrees centigrade for a duration of between 15 minutes and 3 hours; and,
d) drying the leaf tea of step c) to a moisture content of less than 10% by weight.

3. A process according to claim 1 or 2, wherein the one or more enzymes capable of degrading plant biomass are selected from a pectinase enzyme, a cellulase enzyme or a hemicellulose enzyme, preferably a pectinase enzyme.

4. A process according to any one of claims 1 to 3, wherein the leaf tea starting material is a fresh leaf tea starting material.

5. A process according to claim 4, wherein prior to step b) the process further comprises one or both of the following steps:
- withering the fresh leaf tea starting material of step a) to a moisture content of between 35 to 70%; and/or
- macerating the optionally withered fresh leaf tea starting material of step a;

6. A process according to any one of claims 1 to 5, wherein the polycarboxylic acid is selected from citric acid, malic acid, succinic acid, tartaric acid, malonic acid, glutaric acid, aspartic acid, glutamic acid, aconitic acid, propane-1,2,3-tricarboxylic acid, agaric acid and combinations thereof.

7. A process according to any one of claims 1 to 6, wherein the polycarboxylic acid is citric acid.

8. A process according to any one of claims 1 to 7, wherein the polycarboxylic acid is added in an amount of between 0.1 and 5 wt% based on the weight of the leaf tea starting material.

9. A process according to any one of claims 1 to 8 wherein the pectinase enzyme is added in an amount of between 0.1 and 5 wt% based on the weight of the leaf tea starting material.

10. A black tea product obtained by the process as defined in any one of claims 1 to 9.
